# EUROPÄISCHE PATENTSCHRIFT

(11) **EP 4 054 128 B1**
(45) Veröffentlichungstag und Bekanntmachung des Hinweises auf die Patenterteilung: **29.04.2026**
(21) Anmeldenummer: 21159997.2
(22) Anmeldetag: 01.03.2021
(51) Int. Cl.: H04L 12/403, H04L 12/40, H04L 61/5038

(54) **VERFAHREN ZUR INITIALISIERUNG EINES SERIELLEN KOMMUNIKATIONSBUSSYSTEMS**
METHOD FOR INITIALIZING A SERIAL COMMUNICATION BUS SYSTEM
PROCÉDÉ D'INITIALISATION D'UN SYSTÈME DE BUS DE COMMUNICATION SÉRIE

(43) Veröffentlichungstag der Anmeldung: 07.09.2022
(73) Patentinhaber: Elmos Semiconductor SE, 51379 Leverkusen (DE)
(72) Erfinder: Leitner, Thomas, 01259 Dresden (DE)
(74) Vertreter: dompatent

(56) Entgegenhaltungen:
- WO-A1-92/04675
- DE-A1- 19 931 999
- US-A- 4 982 185

## Beschreibung

Die Erfindung betrifft ein Verfahren zur Initialisierung eines seriellen Kommunikationsbussystems, bei dem ein Busmaster und eine Anzahl N von Teilnehmern, mit N als natürliche Zahl größer als oder gleich 2, an einen Kommunikationsbus angeschlossen und die Teilnehmer durch den Kommunikationsbus untereinander verbunden sind, indem ein erster Teilnehmer mit dem Busmaster verbunden ist und ein zweiter Teilnehmer mit dem ersten Teilnehmer verbunden ist und so weiter, bis zum N-ten, d.h. letzten Teilnehmer, der mit dem vorletzten Teilnehmer verbunden ist.

Derartige Kommunikationsbussysteme weisen also eine Daisy-Chain-Verbindung der Teilnehmer untereinander sowie des ersten Teilnehmers mit dem Busmaster auf. Stromab des Busmasters befindet sich also die Hintereinanderschaltung der Teilnehmer, von denen der zweite Teilnehmer stromab des ersten Teilnehmers, der dritte Teilnehmer stromab des zweiten Teilnehmers und so weiter angeordnet ist. Stromauf des letzten Teilnehmers, also des N-ten Teilnehmers befindet sich der vorletzte Teilnehmer, also der (N-1)-te Teilnehmer.

Derartige Kommunikationsbussysteme werden in zunehmendem Maße für Innenbeleuchtungsanwendungen bei Fahrzeugen eingesetzt. Sie zeichnen sich durch hohe Übertragungsraten und einen einfachen Aufbau aus. Ein bereits außerhalb des Automotive-Bereichs eingesetzter derartiger Kommunikationsbus ist der LVDS-Standard, bei dem differenzielle Spannungssignale genutzt werden, um Informationen ausgehend vom Busmaster zu den Teilnehmern zu senden.

Eine Anforderung an insbesondere kostengünstige Kommunikationsbussysteme besteht darin, dass ihre Teilnehmer bei jeder Initialisierung zunächst adressiert werden müssen. Bekannte diesbezügliche Verfahren führen diese Auto-Adressierung in mehreren Zyklen durch, was hinsichtlich der Programmierung und des Zeitaufwandes aufwendig sein kann.

In DE-A-199 31 999 ist eine Anordnung von Barcodelesegeräten in einem Bussystem für z.B. industrielle Anwendungen wie z.B. Förder- oder Produktionsanlagen beschrieben. Die Barcodelesegeräte sind über Zuleitungen an eine Steuereinheit angeschlossen und werden jeweils unter einer Adresse von der Steuereinheit abgefragt. Die Barcodelesegeräte sind in einer Reihe an die Steuereinheit angeschlossen, wobei die Adresswerte der einzelnen Barcodelesegeräte deren Positionen innerhalb der Reihe entsprechen. Vor der Adressvergabe ist die Verbindungsleitung jedes Barcodelesegeräts zum jeweils benachbarten Barcodelesegerät durch geöffnete Schalter unterbrochen. Die Adressvergabe erfolgt beginnend mit dem zur Steuereinheit nächst benachbart angeordneten Barcodelesegerät. Dieses Barcodelesegerät nimmt die von der Steuereinheit über die Zuleitung verschickte Adresse an und meldet die Adressübernahme gegenüber der Steuereinheit. Anschließend schließt dieses Barcodelesegerät seine Schalter, so dass dieses Gerät nun mit dem nächsten Barcodelesegerät der Reihenschaltung elektrisch verbunden ist. Die Steuereinheit inkrementiert den Adresszähler und sendet nun den um eins erhöhten Adresswert an das zweite Barcodelesegerät. Dieses nimmt die Adresse auf und meldet die Adressübernahme an das Steuergerät zurück, um dann auch seine Schalter zur Herstellung der Verbindung zum dritten Barcodelesegerät der Reihenschaltung herzustellen. Dieser Vorgang wiederholt sich, bis das letzte Barcodelesegerät der Reihenschaltung seine Adresse übernommen hat. Wird nun von der Steuereinheit die nächste Adresse verschickt, so existiert kein Barcodelesegerät mehr, das diese Adresse übernehmen könnte, womit der Steuereinheit auch nicht gemeldet werden kann, dass die Adresse übernommen worden ist. Nach Ablauf einer gewissen Zeitspanne erkennt also die Steuereinheit anhand der ausbleibenden Rückmeldung, dass die zuvor vergebene Adresse die letzte zu vergebende Adresse war. Die Steuereinheit veranlasst nun genau dieses letzte Barcodelesegerät, einen weiteren zuvor offenen Schalter zu schließen, mit dem ein Abschlusswiderstand elektrisch aktiviert wird. Jedes Barcodelesegerät weist diesen Abschlusswiderstand auf; jedoch nur das letzte Barcodelesegerät der Reihenschaltung schaltet seinen Abschlusswiderstand ein.

In US-A-4 982 185 und WO-A-92/04675 sind weitere Kommunikationsbussysteme mit Autoadressierung ihrer Teilnehmer beschrieben, wobei die Teilnehmer ihre Adressen beginnend mit dem zur Steuereinheit nächstliegenden Teilnehmer der Reihenschaltung von Teilnehmer erhalten. Der am weitesten entfernt von der Steuereinheit angeordnete letzte Teilnehmer der Reihenschaltung von Teilnehmern meldet an die Steuereinheit zurück, wenn er seine Adresse erhalten hat. Somit ist die Steuereinheit darüber unterrichtet, dass der Autoadressiervorgang abgeschlossen ist.

Aufgabe der Erfindung ist es, ein besonders einfaches Verfahren zur Initialisierung eines seriellen Kommunikationsbussystems anzugeben.

Zur Lösung dieser Aufgabe schafft die Erfindung ein Verfahren zur Verfahren zur Initialisierung eines seriellen Kommunikationsbussystems, bei dem ein Busmaster und eine Anzahl N von Teilnehmern, mit N als natürliche Zahl größer als oder gleich 2, an einen Kommunikationsbus angeschlossen und die Teilnehmer durch den Kommunikationsbus untereinander verbunden sind, indem ein erster Teilnehmer mit dem Busmaster verbunden ist und ein zweiter Teilnehmer mit dem ersten Teilnehmer verbunden ist und so weiter, bis zum N-ten, d.h. letzten Teilnehmer, der mit dem vorletzten Teilnehmer verbunden ist, wobei bei dem Verfahren
- der Busmaster einen Initialisierungsbefehl an den mit dem Busmaster verbundenen ersten Teilnehmer sendet,
- der erste Teilnehmer den Initialisierungsbefehl empfängt, einen Zähler inkrementiert, den Initialisierungsbefehl an den mit ihm verbundenen zweiten Teilnehmer weiterleitet und an den Busmaster über den Kommunikationsbus eine Positionsinformation sendet, bei der es sich um ein erstes Positionssignal handelt, das anzeigt, dass der erste Teilnehmer nicht der an den Kommunikationsbus angeschlossene N-te und damit letzte Teilnehmer ist,
- der Busmaster das erste Positionssignal von dem ersten Teilnehmer empfängt und einen Zähler inkrementiert,
- vom zweiten Teilnehmer bis zum N-ten Teilnehmer für jeden i-ten Teilnehmer, mit i = 2, 3, ..., N, derart verfahren wird, dass
   - der i-te Teilnehmer den Initialisierungsbefehl von dem (i-1)-ten Teilnehmer empfängt, einen Zähler inkrementiert und an den Busmaster sowie an den ersten Teilnehmer bis zum (i-1)-ten Teilnehmer eine Positionsinformation sendet, bei der es sich um das erste Positionssignal handelt, wenn der i-te Teilnehmer nicht der N-te und damit letzte Teilnehmer ist, und bei der es sich um ein zweites Positionssignal handelt, wenn der i-te Teilnehmer der N-te und damit der letzte Teilnehmer ist,
   - jeder der Teilnehmer vom ersten Teilnehmer bis zum (i-1)-ten Teilnehmer nur bei Empfang des ersten Positionssignals seinen Zähler inkrementiert,
   - der Busmaster mit jedem Empfang eines ersten Positionssignals seinen Zähler inkrementiert und
- dieser Vorgang beendet ist, wenn der Busmaster vom N-ten Teilnehmer das zweite Positionssignal erhält, und
- jeder Teilnehmer nach Beendigung dieses Vorgangs einen von den Zählerständen der jeweils anderen Teilnehmer verschiedenen Zähleraufstand aufweist, der ihn identifiziert und seine Position innerhalb der Aufeinanderfolge von mit dem Kommunikationsbus verbundenen Teilnehmern spezifiziert, so dass jeder Teilnehmer nun adressiert werden kann oder sein Zählerstand die Adresse des Teilnehmers bildet.

Nach dem erfindungsgemäßen Verfahren sendet der Busmaster an den mit ihm verbundenen ersten Teilnehmer einen Initialisierungsbefehl, bei dem es sich beispielsweise um einen Kalibrierungsdatenframe handeln kann, der über die Länge eines Datenframes einen gleichbleibenden Pegel aufweist. Bei diesem Pegel handelt es sich beispielsweise um den Spannungspegel für logisch 0 oder logisch 1. Der erste Teilnehmer reagiert auf diesen Initialisierungsbefehl dahingehend, dass er einen internen Zähler inkrementiert. Beispielsweise beträgt der anfängliche Zählerstand dieses Zählers (sowie der Zähler sämtlicher Teilnehmer) null, wobei das Inkrement beispielsweise eins ist. Der erste Teilnehmer erkennt, dass er nicht der letzte Teilnehmer der Reihenschaltung von Teilnehmern ist und sendet über einen Kommunikationsrückkanal an den Busmaster ein erstes Positionssignal, das anzeigt, dass der erste Teilnehmer nicht der letzte an den Kommunikationsbus angeschlossene (und damit nicht der N-te) Teilnehmer ist. Denn nur der letzte Teilnehmer erkennt, dass der Kommunikationsbus stromab "offen" ist, was wiederum damit zusammenhängt, dass die Teilnehmer an ihren Eingängen, an denen sie mit den Ausgängen der jeweils stromauf benachbarten Teilnehmer verbunden sind, einen Abschlusswiderstand aufweisen.

Der mit dem ersten Teilnehmer verbundene zweite Teilnehmer empfängt nun vom ersten Teilnehmer den Initialisierungsbefehl. Sofern dieser zweite Teilnehmer nicht der letzte, also N-te Teilnehmer ist, sendet auch dieser zweite Teilnehmer das erste Positionssignal zurück an den Busmaster und an den ersten Teilnehmer. Dieser erste Teilnehmer inkrementiert nun seinen Zähler. Auch der Busmaster inkrementiert seinen Zähler.

Der zuvor gesagte Prozess wiederholt sich für jeden stromab jeweils benachbarten Teilnehmer, und zwar mit Ausnahme des letzten Teilnehmers. Jeder dieser besagten Teilnehmer sendet also ein erstes Positionssignal an den Busmaster sowie sämtliche stromauf in der Reihenschaltung angeordnete Teilnehmer, die dementsprechend ihre Zähler jeweils inkrementieren.

Der letzte, also N-te Teilnehmer erhält von dem vorletzten Teilnehmer ebenfalls den Initialisierungsbefehl, sendet aber ein zweites Positionssignal über den Kommunikationsrückkanal an sämtliche stromauf angeordneten Teilnehmer sowie den Busmaster. Dieses zweite Kommunikationssignal wird aber von diesen anderen Teilnehmern nicht genutzt, um ihre jeweiligen Zählerstände zu inkrementieren; vielmehr bleiben diese Zählerstände gleich. Der Busmaster erkennt anhand des Empfangs des zweiten Positionssignals, dass der von ihm ausgesendete Initialisierungsbefehl schrittweise nun beim letzten Teilnehmer angekommen ist, womit dieser Teil der Initialisierung abgeschlossen ist.

Am Ende dieses Vorgangs weist nun jeder Teilnehmer einen Zählerstand auf, der von den Zählerständen der anderen Teilnehmer jeweils verschieden ist. In dem Beispiel, in dem sämtliche Teilnehmer zu Beginn des Vorgangs den Zählerstand null aufweisen und das Inkrement eins ist, weist also der Zählerstand des N-ten Teilnehmers den Wert 1 auf, der Zählerstand des vorletzten Teilnehmers den Wert 2 usw. auf, wobei der mit dem Busmaster verbundene erste Teilnehmer den Zählerstand N aufweist. Damit sind nun sämtliche Teilnehmer identifiziert und hinsichtlich ihrer Positionen innerhalb der Aufeinanderfolge von mit dem Kommunikationsbus verbundenen Teilnehmern spezifiziert, so dass sie nun vom Busmaster über ihre durch die Zählerstände identifizierten Informationen gezielt angesprochen werden können.

Wie zuvor beschrieben, kann also vorgesehen sein, dass der Busmaster über eine Information betreffend die Anzahl N der an den Kommunikationsbus angeschlossenen Teilnehmern verfügt und dass der Busmaster nach Erhalt eines zweiten Positionssignals seinen Zählerstand bzw. die Anzahl von Inkrementierungen seines Zählerstandes mit der Anzahl N der Teilnehmer vergleicht und eine Fehlermeldung ausgibt oder die Initialisierung wiederholt, wenn der Zählerstand oder die Anzahl an Inkrementierungen des Zählerstandes nicht mit der Anzahl N an Teilnehmern übereinstimmt.

Das erfindungsgemäße Verfahren zeichnet sich durch einen einfachen Aufbau sowie ein einfaches Protokoll der Initialisierungsroutine aus. Der gesamte AutoAdressiervorgang erfolgt durch einmalige jeweils sequenzielle Weitergabe des Initialisierungsbefehls vom Busmaster zum ersten Teilnehmer sowie danach von Teilnehmer zu Teilnehmer stromab bis zum letzten Teilnehmer. Die Rückmeldung durch das Versenden von ersten Positionssignale seitens sämtlicher Teilnehmer mit Ausnahme des letzten Teilnehmers, und des zweiten Positionssignals durch den letzten Teilnehmer an jeweils sämtliche stromauf angeordneten Teilnehmer sowie den Busmaster erfolgt über einen Kommunikationsrückkanal, der Teil des Kommunikationsbus für die Kommunikation vom Busmaster zu den Teilnehmern sein kann oder aber der durch eine separate Leitung realisiert ist.

Wie bereits oben erwähnt, weist jeder Teilnehmer typischerweise einen Eingang mit einem Abschlusswiderstand und ferner einen Spannungskomparator auf, von dem beim Senden des Initialisierungsbefehls von dem einen Teilnehmer an den nächsten Teilnehmer ein Signal ausgegeben wird, das anzeigt, ob am Spannungskomparator eine Spannung anliegt, die kleiner als eine oder gleich einer oder größer als die Referenzspannung ist, wodurch angezeigt wird, ob der besagte Teilnehmer der N-te und damit letzte Teilnehmer ist oder nicht. Der Vorteil dieses Aufbaus der Teilnehmer ist darin zu sehen, dass mit einem einfachen Spannungskomparator, der lediglich eine einzige Vergleichsschwelle aufweist, beurteilt werden kann, ob es sich bei dem Teilnehmer um den letzten Teilnehmer der Reihenschaltung von Teilnehmern oder aber um einen der Teilnehmer handelt, die stromauf des letzten Teilnehmers in der Reihenschaltung von Teilnehmern angeordnet ist. Die Referenzspannung bestimmt sich dabei anhand des Spannungsabfalls, der sich über dem Abschlusswiderstand beim Senden des Initialisierungsbefehls von einem Teilnehmer zum nächsten stromab angeordneten Teilnehmer einstellt.

Ein Problem bei Daisy-Chain-Kommunikationsbussystemen wie dem erfindungsgemäßen besteht darin, dass der Ausfall eines Teilnehmers dazu führen kann, dass die ausgehend von diesem ausgefallenen Teilnehmer stromauf angeordneten Teilnehmer nicht mehr angesteuert werden können. Für diese Fälle ist es vorteilhaft, wenn der Kommunikationsbus Bypass-Möglichkeiten bereithält, um sozusagen an dem defekten Teilnehmer vorbei Kommunikation mit stromab dieses Teilnehmers angeordneten Teilnehmern zu führen. Beispiele für derartige Bypass-Möglichkeiten sind in EP-A-3 264 680, WO-A-2009/040015, WO-A-2017/125440, WO-A-2018/114937 und US-A-2007/0025240 beschrieben. Ein weiteres Bypass-Verfahren, das im Rahmen dieser Erfindung ebenfalls eingesetzt werden kann, ist in der europäischen Patentanmeldung 20 217 497.5 vom 29. Dezember 2020 beschrieben, womit der Gegenstand dieser besagten europäischen Patentanmeldung hiermit durch Bezugnahme zum Inhalt der vorliegenden Patentanmeldung gehört.

In weiterer zweckmäßiger Ausgestaltung der Erfindung werden defekte Teilnehmer dadurch erkannt,
- dass jeder Teilnehmer vor der Versendung des Initialisierungsbefehls durch den Busmaster an den ersten Teilnehmer einen Selbsttest auf Funktionstüchtigkeit durchführt und somit feststellt, ob er intakt oder defekt ist,
- dass der Initialisierungsbefehl auf dem Kommunikationsbus an dem defekten Teilnehmer vorbei zum vom Busmaster aus betrachtet nächsten stromab des defekten Teilnehmers angeordneten intakten Teilnehmer weitergeleitet wird,
- dass ein stromauf eines defekten Teilnehmers angeordneter intakter Teilnehmer erkennt, dass sein besagter stromab benachbart angeordneter Teilnehmer defekt ist, und bei Erhalt des Initialisierungsbefehls an sämtliche stromauf angeordnete Teilnehmer und an den Busmaster ein zweites Positionssignal sendet und
- dass der Busmaster anhand einer Vorab-Information über die Anzahl N von an den Busmaster angeschlossenen Teilnehmern und der Anzahl an empfangenen ersten Positionssignalen sowie zweiten Positionssignalen erkennt, wie viele intakte und somit identifizierte Teilnehmer sowie hinsichtlich ihrer Position innerhalb der Aufeinanderfolge von intakten Teilnehmern spezifizierte Teilnehmer an den Kommunikationsbus angeschlossen sind.

Der Busmaster zählt also die Anzahl an empfangenen ersten Positionssignalen sowie die Anzahl an empfangenen zweiten Positionssignalen. Empfängt der Busmaster ein zweites Positionssignal zu einem Zeitpunkt, zu dem die Gesamtzahl an von ihm empfangenen Positionsinformationssignalen einschließlich des gerade empfangenen zweiten Positionssignals kleiner ist als die Anzahl N an Teilnehmern, so erkennt der Busmaster, dass dieses zweite Positionssignal nicht von dem letzten Teilnehmer der Reihenschaltung von Teilnehmern stammen kann. In einem solchen Fall erkennt der Busmaster dann ferner, dass sich stromab des besagten Teilnehmers, von dem das zweite Positionssignal stammt, ein defekter Teilnehmer befinden muss und registriert für jedes derartige zweite Positionssignal, dass ein (gegebenenfalls weiterer) Teilnehmer der N Teilnehmer defekt ist. Diese Erkennung der Anzahl an defekten Teilnehmern wird in denjenigen in der Praxis sehr unwahrscheinlichen Fällen unspezifisch, in denen mindestens zwei benachbart angeordnete Teilnehmer defekt sind oder der letzte Teilnehmer defekt ist.

Durch diese Vorgehensweise werden also die defekten Teilnehmer sozusagen "markiert". Weist das Kommunikationsbussystem beispielsweise einen defekten Teilnehmer auf, so empfängt der Busmaster während der erfindungsgemäßen Initialisierungsroutine das zweite Positionssignal insgesamt zweimal. Da der Busmaster "weiß", wie viele Teilnehmer das Kommunikationsbussystem aufweist, wird er beim erstmaligen Empfang des zweiten Positionssignals den Vorgang noch nicht abbrechen, sondern erst dann abbrechen, wenn die Gesamtanzahl an empfangenen ersten und zweiten Positionssignalen gleich der Anzahl N von Teilnehmern ist. Die defekten Teilnehmer verhalten sich hinsichtlich einer Inkrementierung ihrer Zählerstände passiv, verarbeiten also die Positionssignale, die sie von den stromab angeordneten Teilnehmern empfangen, nicht. Die intakten Teilnehmer verarbeiten, wie bereits oben beschrieben, ausschließlich die ersten Positionssignale derart, dass sie ihre Zählerstände inkrementieren. Am Ende der Initialisierungsroutine nach der Erfindung weisen dann wiederum sämtliche intakten Teilnehmer voneinander verschiedene Zählerstände auf, so dass auch hier wiederum die Identifizierung und die Spezifizierung der intakten Teilnehmer hinsichtlich ihrer innerhalb der Aufeinanderfolge von intakten Teilnehmern eingenommenen Position gegeben ist.

In weiterer vorteilhafter Ausgestaltung der Erfindung kann die Überbrückung defekter Teilnehmer innerhalb des Kommunikationsbussystems beispielsweise dadurch erfolgen, dass jedem Teilnehmer in dem Kommunikationsbus eine Bypass-Schaltereinheit mit ein oder mehreren Schaltern zugeordnet ist, über die in einem ersten Schaltzustand die Kommunikation und die Versendung von Positionsinformation ohne Einbindung des Teilnehmers und in einem zweiten Schaltzustand die Kommunikation und die Versendung von Positionsinformation unter Einbeziehung des Teilnehmers erfolgt.

In weiterer vorteilhafter Ausgestaltung der Erfindung kann vorgesehen sein, dass in jedem Teilnehmer der Abschlusswiderstand mittels eines Testschalters aktivierbar oder deaktivierbar ist und dass der Abschlusswiderstand bei einem defekten Teilnehmer durch Ausschalten des Testschalters deaktiviert und bei einem intakten Teilnehmer durch Einschalten des Testschalters aktiviert ist.

Wie bereits oben beschrieben, weist das Kommunikationsbussystem einen Kommunikationsrückkanal auf, über den die einzelnen Teilnehmer an ihre jeweils stromauf benachbart angeordneten Teilnehmer und den Busmaster Status- bzw. Positionssignale versenden. In einer bevorzugten Ausgestaltung der Erfindung kann hierfür vorgesehen sein, dass der Kommunikationsbus einen differentiellen, bei einem Common-Mode-Pegel zu betreibenden Zweidrahtbus zur Übertragung differentieller Signale in einer ersten Kommunikationsrichtung von dem Busmaster zu den Teilnehmern und einen Rückkanal zur Übertragung von Signalen in einer zur ersten Kommunikationsrichtung entgegengesetzten zweiten Kommunikationsrichtung von den Teilnehmern zu dem Busmaster aufweist.

Der zuvor angesprochene Rückkanal kann als eine Eindrahtleitung oder durch eine Modulation des Common-Mode-Pegels des Zweidrahtbus realisiert sein.

Im Falle der Modulation des Common-Mode-Pegels zur Nutzung des differenziell zu betreibenden Zweidrahtbus als Rückkanal kann auch gemäß dem Gegenstand der europäischen Patentanmeldung 21 153 488.8 vom 26. Januar 2021 verfahren werden, womit der Gegenstand der besagten europäischen Patentanmeldung hiermit durch Bezugnahme zum Inhalt der vorliegenden Patentanmeldung gehört. Alternative Verfahren für die Realisierung des Rückkanals sind beispielsweise in US-A-5 485 488 und US-B-6 813 483 beschrieben.

Schließlich kann der Initialisierungsbefehl in jedem (intakten) Teilnehmer zur Kalibrierung verschiedener elektronischer Komponenten, wie z.B. eines Frequenzteilers zur Bereitstellung der (Abtast-)Frequenz des Abtastsignals zur Abtastung des ankommenden Datenbitstroms und zur Generierung des von einem Teilnehmer an den nächsten Teilnehmer zu sendenden (Ausgangs-)Datenbitstroms genutzt werden.

Die Erfindung wird nachfolgend anhand eines Ausführungsbeispiels und unter Bezugnahme auf die Zeichnung näher erläutert. Im Einzelnen zeigen dabei:
- Fig. 1: einen beispielhaften Aufbau eines Teilnehmers eines Daisy-Chain-Kommunikationsbussystems gemäß z.B. dem LVDS-Standard,
- Fig. 2: der Signalverlauf auf der Empfangs- und der Sendeseite eines Teilnehmers bei Empfang des Initialisierungsbefehls (Kalibrierungsframe) sowie auf dem Rückkanal,
- Fign. 3a) bis 3d): den Ablauf der Initialisierungsroutine für das Beispiel eines Kommunikationsbussystems mit dem Busmaster und drei Teilnehmern, die sämtlich intakt sind, und
- Fign. 4a) bis 4c): ein Beispiel eines Kommunikationsbussystems mit Busmaster und drei Teilnehmern, von denen einer defekt ist.

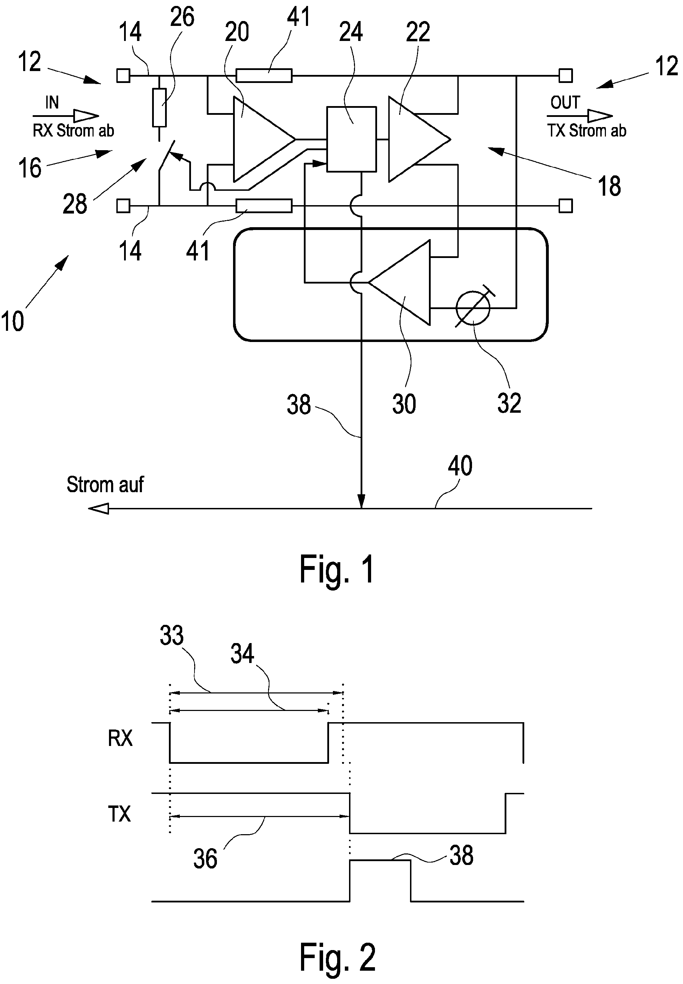

Fig. 1 zeigt schematisch die Hauptkomponenten der Hardware eines Teilnehmers 10 eines Daisy-Chain-Kommunikationsbussystems, der an einen Kommunikationsbus 12 angeschlossen ist, der als differenzieller Zweidrahtbus 14 ausgebildet ist. Der Teilnehmer 10 weist einen Eingang 16 sowie einen Ausgang 18 auf. Am Eingang 16 befindet sich ein Empfänger 20, während sich am Ausgang 18 ein Sender 22 befindet. Zwischen beiden befindet sich eine Daten- und Signalverarbeitungseinheit 24 zur Auswertung der empfangenen Signale und zur Bildung der zu sendenden Signale sowie zur Steuerung einer Applikation wie beispielsweise einer RGB-Leuchteinheit, die in Fig. 1 nicht gezeigt ist.

Parallel zum Eingang 16 weist der Teilnehmer 10 einen Abschlusswiderstand 26 sowie in Reihe dazu einen Testschalter 28 auf. Durch einen vom Teilnehmer 10 vor der Vergabe von Adressen erfolgenden Selbsttest wird erkannt, ob der Teilnehmer 10 intakt oder defekt ist. Sofern der Teilnehmer 10 nicht funktionstüchtig, als defekt ist, bleibt der Testschalter 28 offen. In dem Fall, dass der Teilnehmer 10 ordnungsgemäß arbeitet, also intakt ist, wird der Testschalter 28 geschlossen, womit dieser Teilnehmer an seinem Eingang 16 den Abschlusswiderstand 26 aufweist.

Am Ausgang 18 kann der Teilnehmer 10 einen Spannungsabfall detektieren, wenn von ihm über den Kommunikationsbus 12 innerhalb der Dauer des Initialisierungsbefehls, den der Teilnehmer 10 an seinen stromab benachbarten Teilnehmer sendet, sofern der besagte Teilnehmer 10 nicht der stromab letzte Teilnehmer der Reihenschaltung von Teilnehmern ist bzw. auf ihn stromab ein intakter Teilnehmer folgt. Der Spannungsabfall wird mit Hilfe eines Spannungskomparators 30 detektiert, der die Spannung am Ausgang 18 mit einer Referenzspannung 32 vergleicht, die durch die Größe des Stroms in dem Kommunikationsbus 12 und der Größe des Abschlusswiderstandes 26 definiert ist. Das Vergleichssignal des Komparators 30 wird der Daten- und Signalverarbeitungseinheit 24 zugeführt.

In Fig. 1 ist durch zwei Überbrückungswiderstände 41 angedeutet, dass in dem Fall, dass der Teilnehmer 10 defekt ist, die Kommunikation und insbesondere der Kalibrierungsframe 33 an Sender 22 und Empfänger 20 sowie Daten- und Signalverarbeitungseinheit 24 des defekten Teilnehmers 10 vorbei auf dem Kommunikationsbus zum stromab nächsten intakten Teilnehmer 10 weitergeleitet wird. Andere Möglichkeiten, um einen defekten Teilnehmer zu überbrücken, sind bekannt und können im Rahmen der Erfindung verwendet werden.

Fig. 2 zeigt das Signal-Timing-Diagramm für einen Teilnehmer 10. In der Initialisierungsphase empfängt jeder intakte Teilnehmer 10 ein RX-Signal, bei dem es sich um einen Kalibrierungsframe 33 handelt. Hierbei ist der Pegel auf dem Kommunikationsbus 12 konstant, wobei er beispielsweise gleich dem logisch 1- oder logisch 0-Pegel ist. Die Länge des Kalibrierungsframe 33 ist größer als die Messzeit 34, die benötigt wird, um am Ausgang 18 des Teilnehmers 10 mittels des Spannungskomparators 30 den zuvor beschriebenen Spannungsvergleich durchzuführen. Die Kalibrierungslatenz 36 des Ausgangssignals TX am Ausgang 18 des Teilnehmens 10 ist also entsprechend gewählt. Danach erzeugt die Daten- und Signalverarbeitungseinheit 24 ein Positionsinformationssignal 38, das auf einen Rückkanal 40 (siehe auch Fig. 1) gegeben wird, an den jeder Teilnehmer 10 sowie der Busmaster angeschlossen ist.

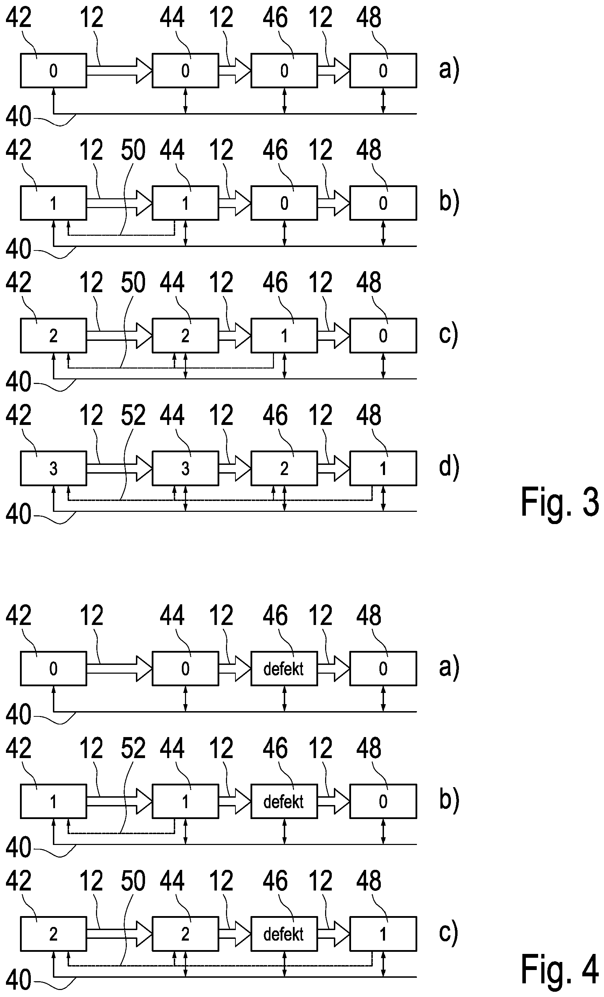

In den Fign. 3a) bis 3d) sowie 4a) bis 4c) sind zwei Szenarien für die erfindungsgemäße Vorgehensweise bei der Auto-Adressierung der Teilnehmer von Kommunikationsbussystemen gezeigt, wobei in dem Beispiel der Fign. 3a) bis 3d) sämtliche Teilnehmer intakt sind, während in dem Fall der Fign. 4a) bis 4c) einer der Teilnehmer defekt ist. Die unterschiedlichen, sich in den einzelnen Phasen einstellenden Zählerstände der Teilnehmer und des Busmasters sind in den Figuren angegeben.

Fig. 3a) zeigt die Ausgangssituation in einem beispielhaften Kommunikationsbussystem mit Busmaster 42 sowie drei Teilnehmern 44, 46 und 48, die sämtlich intakt sind.

Der Busmaster 42 sendet den Kalibrierungsframe zum ersten Teilnehmer 44, der daraufhin einen internen Zähler auf 1 inkrementiert und ein erstes Positionssignal 50 an den Busmaster zurücksendet, woraufhin dieser einen internen Zähler auf 1 inkrementiert (siehe Fig. 3b)). Gemäß Fig. 3c) sendet nun der Teilnehmer 44 den Kalibrierungsframe an den stromab angeordneten nächsten Teilnehmer 46, der ebenfalls über den Rückkanal 40 ein erstes Positionssignal 50 zurücksendet, und zwar in diesem Fall an den stromauf benachbarten Teilnehmer 44 und den Busmaster 42, die ihre Zählerstände jeweils um eins erhöhen, während der Teilnehmer 46 selbst seinen Zähler auf 1 setzt.

In Fig. 3d) ist gezeigt, wie nun der zweite Teilnehmer 46 den Kalibrierungsframe an den stromab nächsten Teilnehmer 48 sendet, der daraufhin seinen Zähler auf 1 setzt. Anhand des Vergleichs durch seinen Spannungskomparator 30 erkennt der Teilnehmer 48, dass auf ihn stromab entweder kein weiterer Teilnehmer, er also der letzte Teilnehmer ist, oder aber ein defekter Teilnehmer folgt. Daher sendet er über den Rückkanal 40 an den Busmaster 42 und sämtliche stromauf des besagten Teilnehmers 48 angeordnete Teilnehmer (in diesem Fall die Teilnehmer 44 und 46) das zweite Positionssignal. Diese Teilnehmer 44, 46 sowie der Busmaster 42 erhöhen ihre Zählerstände, so dass nun der Busmaster den Zählerstand 3, der erste Teilnehmer 44 den Zählerstand 3, der zweite Teilnehmer 46 den Zählerstand 2 und der dritte Teilnehmer 48 (letzter Teilnehmer) den Zählerstand 1 aufweist. Da der Zählerstand des Busmasters 12 nun gleich der Anzahl der Teilnehmer ist, ist der Vorgang abgeschlossen.

In dem Beispiel gemäß Fig. 4 weist das Kommunikationsbussystem neben dem Busmaster 42 wiederum die drei Teilnehmer 44, 46, 48 auf, von denen jedoch der Teilnehmer 46 defekt ist.

Der Busmaster 42 sendet zu Beginn wiederum den Kalibrierungsframe an den ersten Teilnehmer 44, der erkennt, dass der nächste stromab zu ihm benachbart angeordnete Teilnehmer 46 defekt ist, und zwar anhand des Vergleichs durch seinen Spannungskomparator 30. Er sendet nun über den Rückkanal 40 das zweite Positionssignal 52 und setzt seinen Zähler auf 1. Der Busmaster 42 erkennt, dass er bisher weniger Positionsinformationssignale erhalten hat als Teilnehmer existieren, und setzt seinen Zähler auf 1. Darüber hinaus weiß nun der Busmaster 42, dass der nächste Teilnehmer 46 defekt ist. Der Kalibrierungsframe wird nun von dem ersten Teilnehmer 44 an dem ausgefallenen defekten Teilnehmer 46 vorbei zum in diesem Fall letzten Teilnehmer 48 gesendet, der, da er intakt ist, seinen Zähler auf 1 setzt und das zweite Positionssignal 52 zurücksendet. Dieses zweite Positionssignal 50 wird vom ersten Teilnehmer 44 sowie vom Busmaster 42 empfangen, woraufhin beide ihre Zähler erhöhen. Der Busmaster 42 erkennt nun, dass er insgesamt zwei Positionssignale erhalten hat und "weiß", dass einer der Teilnehmer defekt ist. Somit hat der Busmaster 42 nun Informationen über sämtliche an den Kommunikationsbus angeschlossene Teilnehmer, womit der Vorgang abgeschlossen ist.

### BEZUGSZEICHENLISTE

- 10: Teilnehmer
- 12: Kommunikationsbus
- 14: Zweidrahtbus
- 16: Eingang
- 18: Ausgang
- 20: Empfänger
- 22: Sender
- 24: Daten- und Signalverarbeitungseinheit
- 26: Abschlusswiderstand
- 28: Testschalter
- 30: Spannungskomparator
- 32: Referenzspannung
- 33: Kalibrierungsframe
- 34: Messzeit
- 36: Kalibrierungslatenz
- 38: Positionsinformationssignal
- 40: Rückkanal
- 41: Überbrückungswiderstand
- 42: Busmaster
- 44: Teilnehmer
- 46: Teilnehmer
- 48: Teilnehmer
- 50: erstes Positionssignal
- 52: zweites Positionssignal

## Patentansprüche

1. Verfahren zur Initialisierung eines seriellen Kommunikationsbussystems, bei dem ein Busmaster und eine Anzahl N von Teilnehmern, mit N als natürliche Zahl größer als oder gleich 2, an einen Kommunikationsbus angeschlossen und die Teilnehmer durch den Kommunikationsbus untereinander verbunden sind, indem ein erster Teilnehmer mit dem Busmaster verbunden ist und ein zweiter Teilnehmer mit dem ersten Teilnehmer verbunden ist und so weiter, bis zum N-ten, d.h. letzten Teilnehmer, der mit dem vorletzten Teilnehmer verbunden ist, wobei bei dem Verfahren
- der Busmaster einen Initialisierungsbefehl an den mit dem Busmaster (42) verbundenen ersten Teilnehmer (44) sendet,
- der erste Teilnehmer den Initialisierungsbefehl empfängt, einen Zähler inkrementiert, den Initialisierungsbefehl an den mit ihm verbundenen zweiten Teilnehmer (46) weiterleitet und an den Busmaster (42) über den Kommunikationsbus (12) eine Positionsinformation sendet, bei der es sich um ein erstes Positionssignal (50) handelt, das anzeigt, dass der erste Teilnehmer (44) nicht der an den Kommunikationsbus (12) angeschlossene N-te Teilnehmer und damit nicht der letzte Teilnehmer (48) ist,
- der Busmaster (42) das erste Positionssignal (50) von dem ersten Teilnehmer (44) empfängt und einen Zähler inkrementiert,
- vom zweiten Teilnehmer (46) bis zum N-ten Teilnehmer für jeden i-ten Teilnehmer, mit i = 2, 3, ..., N, derart verfahren wird, dass
- der i-te Teilnehmer den Initialisierungsbefehl von dem (i-1)-ten Teilnehmer empfängt, einen Zähler inkrementiert und an den Busmaster (42) sowie an den ersten Teilnehmer (44) bis zum (i-1)-ten Teilnehmer eine Positionsinformation sendet, bei der es sich um das erste Positionssignal (50) handelt, wenn der i-te Teilnehmer nicht der N-te Teilnehmer und damit nicht der letzte Teilnehmer ist, und bei der es sich um ein zweites Positionssignal (52) handelt, wenn der i-te Teilnehmer der N-te und damit der letzte Teilnehmer ist,
- jeder der Teilnehmer vom ersten Teilnehmer (44) bis zum (i-1)-ten Teilnehmer nur bei Empfang des ersten Positionssignals (50) seinen Zähler inkrementiert,
- der Busmaster (42) mit jedem Empfang eines ersten Positionssignals (50) seinen Zähler inkrementiert und
- dieser Vorgang beendet ist, wenn der Busmaster (42) vom N-ten Teilnehmer das zweite Positionssignal (52) erhält, und
- jeder Teilnehmer nach Beendigung dieses Vorgangs einen von den Zählerständen der jeweils anderen Teilnehmer verschiedenen Zähleraufstand aufweist, der ihn identifiziert und seine Position innerhalb der Aufeinanderfolge von mit dem Kommunikationsbus (12) verbundenen Teilnehmern spezifiziert.

2. Verfahren nach Anspruch 1, **dadurch gekennzeichnet, dass** der Busmaster (42) über eine Information betreffend die Anzahl N der an den Kommunikationsbus (12) angeschlossenen Teilnehmern verfügt und dass der Busmaster (42) nach Erhalt eines zweiten Positionssignals (52) seinen Zählerstand bzw. die Anzahl von Inkrementierungen seines Zählerstandes mit der Anzahl N der Teilnehmer vergleicht und eine Fehlermeldung ausgibt oder die Initialisierung wiederholt, wenn der Zählerstand oder die Anzahl an Inkrementierungen des Zählerstandes nicht mit der Anzahl N an Teilnehmern übereinstimmt.

3. Verfahren nach Anspruch 1 oder 2, **dadurch gekennzeichnet, dass** die Zählerstände sämtlicher Teilnehmer zu Beginn der Initialisierung gleich sind und insbesondere den Wert 0 aufweisen und dass die Inkrementierung jedes Zählers gleich groß ist und insbesondere den Wert 1 aufweist.

4. Verfahren nach einem der Ansprüche 1 bis 3, **dadurch gekennzeichnet, dass** jeder Teilnehmer einen Eingang mit einem Abschlusswiderstand (26) und ferner einen Spannungskomparator (30) aufweist, von dem beim Senden des Initialisierungsbefehls von dem einen Teilnehmer an den nächsten Teilnehmer ein Signal ausgegeben wird, das anzeigt, ob am Spannungskomparator (30) eine Spannung anliegt, die kleiner als eine oder gleich einer oder größer als die Referenzspannung ist, wodurch angezeigt wird, ob der besagte Teilnehmer der N-te und damit letzte Teilnehmer ist oder nicht.

5. Verfahren nach einem der Ansprüche 1 bis 4, **dadurch gekennzeichnet,**
- **dass** jeder Teilnehmer vor der Versendung des Initialisierungsbefehls durch den Busmaster (42) an den ersten Teilnehmer (44) einen Selbsttest auf Funktionstüchtigkeit durchführt und somit feststellt, ob er intakt oder defekt ist,
- **dass** der Initialisierungsbefehl auf dem Kommunikationsbus (12) an einem defekten Teilnehmer vorbei zum vom Busmaster (42) aus betrachtet nächsten stromab des defekten Teilnehmers angeordneten intakten Teilnehmer weitergeleitet wird,
- **dass** ein stromauf eines defekten Teilnehmers angeordneter intakter Teilnehmer erkennt, dass sein besagter stromab benachbart angeordneter Teilnehmer defekt ist, und bei Erhalt des Initialisierungsbefehls an sämtliche stromauf angeordnete Teilnehmer und an den Busmaster (42) ein zweites Positionssignal (52) sendet und
- **dass** der Busmaster (42) anhand einer Vorab-Information über die Anzahl N von an den Busmaster (42) angeschlossenen Teilnehmern und der Anzahl an empfangenen ersten Positionssignalen (50) sowie zweiten Positionssignalen (52) erkennt, wie viele intakte und somit identifizierte Teilnehmer sowie hinsichtlich ihrer Position innerhalb der Aufeinanderfolge von intakten Teilnehmern spezifizierte Teilnehmer an den Kommunikationsbus angeschlossen sind.

6. Verfahren nach Anspruch 5, **dadurch gekennzeichnet, dass** jedem Teilnehmer in dem Kommunikationsbus (12) eine Bypass-Schaltereinheit mit ein oder mehreren Schaltern zugeordnet ist, über die in einem ersten Schaltzustand die Kommunikation und die Versendung von Positionsinformation ohne Einbindung des Teilnehmers und in einem zweiten Schaltzustand die Kommunikation und die Versendung von Positionsinformation unter Einbeziehung des Teilnehmers erfolgt.

7. Verfahren nach einem der Ansprüche 4 bis 6, **dadurch gekennzeichnet, dass** in jedem Teilnehmer der Abschlusswiderstand (26) mittels eines Testschalters (28) aktivierbar oder deaktivierbar ist und dass der Abschlusswiderstand (26) bei einem defekten Teilnehmer durch Ausschalten des Testschalters (28) deaktiviert und bei einem intakten Teilnehmer durch Einschalten des Testschalters (28) aktiviert ist.

8. Verfahren nach einem der Ansprüche 1 bis 7, **dadurch gekennzeichnet, dass** der Kommunikationsbus (12) einen differentiellen, bei einem Common-Mode-Pegel zu betreibenden Zweidrahtbus (14) zur Übertragung differentieller Signale in einer ersten Kommunikationsrichtung von dem Busmaster (42) zu den Teilnehmern und einen Rückkanal (40) zur Übertragung von Signalen in einer zur ersten Kommunikationsrichtung entgegengesetzten zweiten Kommunikationsrichtung von den Teilnehmern zu dem Busmaster (42) aufweist.

9. Verfahren nach Anspruch 8, **dadurch gekennzeichnet, dass** der Rückkanal (40) als eine Eindrahtleitung oder durch eine Modulation des Common-Mode-Pegels des Zweidrahtbus (14) realisiert ist.

## Claims

1. A method of initializing a serial communication bus system in which a bus master and a number N of subscribers, with N as a natural number greater than or equal to 2, are connected to a communication bus and the subscribers are interconnected through the communication bus by a first subscriber being connected to the bus master and a second subscriber being connected to the first subscriber and so on until the N-th, i.e. last subscriber which is connected to the penultimate subscriber, in which method
- the bus master sends an initialization command to the first subscriber (44) connected to the bus master (42),
- the first subscriber receives the initialization command, increments a counter, forwards the initialization command to the second subscriber (46) connected thereto and transmits position information to the bus master (42) via the communication bus (12), which position information is a first position signal (50) indicating that the first subscriber (44) is not the N-th subscriber connected to the communication bus (12) and thus not the last subscriber (48),
- the bus master (42) receives the first position signal (50) from the first subscriber (44) and increments a counter,
- from the second subscriber (46) to the N-th subscriber for each i-th subscriber, where i = 2, 3, ..., N, it is proceeded such that
- the i-th subscriber receives the initialization command from the (i-1)-th subscriber, increments a counter and transmits position information to the bus master (42) and to the first subscriber (44) up to the (i-1)-th subscriber, which position information is the first position signal (50) if the i-th subscriber is not the N-th subscriber and thus not the last subscriber, and which position information is a second position signal (52) if the i-th subscriber is the N-th and thus the last subscriber,
- each of the subscribers from the first subscriber (44) to the (i-1)-th subscriber only increments its counter when the first position signal (50) is received,
- the bus master (42) increments its counter with each reception of a first position signal (50), and
- this process is completed when the bus master (42) receives the second position signal (52) from the N-th subscriber, and
- at the end of this process, each subscriber has a counter reading that is different from the counter readings of the other subscribers, which identifies it and specifies its position within the sequence of subscribers connected to the communication bus (12).

2. The method according to claim 1, **characterized in that** the bus master (42) has information relating to the number N of subscribers connected to the communication bus (12), and **in that** the bus master (42), after receiving a second position signal (52), compares its counter reading or the number of increments of its counter reading with the number N of subscribers and outputs an error message or repeats the initialization if the counter reading or the number of increments of the counter reading does not match the number N of subscribers.

3. The method according to claim 1 or 2, **characterized in that** the counter readings of all subscribers are the same at the beginning of the initialization and in particular have the value 0 and **in that** the incrementation of each counter is the same and in particular has the value 1.

4. The method according to any one of claims 1 to 3, **characterized in that** each subscriber has an input with a terminating resistor (26) and furthermore a voltage comparator (30) from which, when the initialization command is sent from one subscriber to the next subscriber, a signal is output which indicates whether a voltage is present at the voltage comparator (30) which is less than or equal to or greater than a reference voltage, thereby indicating whether said subscriber is the N-th and thus the last subscriber.

5. The method according to any of claims 1 to 4, **characterized in that**
- that before the bus master (42) sends the initialization command to the first subscriber (44), each subscriber performs a self-test for functionality and thus determines whether it is intact or defective,
- that the initialization command is forwarded on the communication bus (12) past a defective subscriber to the next intact subscriber arranged downstream of the defective subscriber as viewed from the bus master (42),
- an intact subscriber arranged upstream of a defective subscriber recognizes that its said subscriber arranged adjacently downstream in the vicinity is defective and, on receipt of the initialization command, transmits a second position signal (52) to all subscribers arranged upstream and to the bus master (42), and
- the bus master (42) uses prior information about the number N of subscribers connected to the bus master (42) and the number of received first position signals (50) and second position signals (52) to recognize how many intact and thus identified subscribers and subscribers specified with regard to their position within the sequence of intact subscribers are connected to the communication bus.

6. The method according to claim 5, **characterized in that** each subscriber in the communication bus (12) is assigned a bypass switch unit with one or more switches via which, in a first switching state, communication and transmission of position information takes place without the involvement the subscriber and, in a second switching state, communication and the transmission of position information take place with the involvement of the subscriber.

7. The method according to one of claims 4 to 6, **characterized in that** the terminating resistor (26) can be activated or deactivated in each subscriber by means of a test switch (28) and **in that** the terminating resistor (26) is deactivated in the case of a defective subscriber by switching off the test switch (28) and is activated in the case of an intact subscriber by switching on the test switch (28).

8. The method according to one of claims 1 to 7, **characterized in that** the communication bus (12) comprises a differential two-wire bus (14) to be operated at a common-mode level for transmitting differential signals in a first communication direction from the bus master (42) to the subscribers and a return channel (40) for transmitting signals in a second communication direction opposite to the first communication direction from the subscribers to the bus master (42).

9. The method according to claim 8, **characterized in that** the return channel (40) is implemented as a single-wire line or by modulation of the common-mode level of the two-wire bus (14).

## Revendications

1. Procédé d'initialisation d'un système de bus de communication série, dans lequel un maître de bus et un nombre N participants, avec N en tant qu'entier naturel supérieur ou égal à 2, sont connectés à un bus de communication et les participants sont reliés entre eux par le bus de communication par le fait qu'un premier participant est relié au maître de bus et un deuxième participant est relié au premier participant, et ainsi de suite jusqu'au N-ième, c'est-à-dire le dernier participant, qui est relié à l'avant-dernier participant, où dans le procédé
- le maître de bus envoie une commande d'initialisation au premier participant (44) relié au maître de bus (42),
- le premier participant reçoit la commande d'initialisation, incrémente un compteur, transmet la commande d'initialisation au deuxième participant (46) relié à lui et envoie au maître de bus (42), via le bus de communication (12), une information de position, concernant laquelle il s'agit d'un premier signal de position (50), qui indique que le premier participant (44) n'est pas le N-ième participant connecté au bus de communication (12) et n'est donc pas le dernier participant (48),
- le maître de bus (42) reçoit le premier signal de position (50) du premier participant (44) et incrémente un compteur,
- du deuxième participant (46) jusqu'au N-ième participant, pour chaque i-ème participant, avec i = 2, 3, ..., N, il est procédé de telle manière que
- le i-ème participant reçoit la commande d'initialisation du (i-1)-ème participant, incrémente un compteur et envoie au maître de bus (42) et au premier participant (44), jusqu'au (i-1)-ème participant une information de position, concernant laquelle il s'agit du premier signal de position (50), lorsque le i-ème participant n'est pas le N-ième participant et donc pas le dernier participant, et concernant laquelle il s'agit d'un deuxième signal de position (52), lorsque le i-ème participant est le N-ème et donc le dernier participant,
- chacun des participants, du premier participant (44) au (i-1)-ème participant incrémente son compteur uniquement à la réception du premier signal de position (50),
- le maître de bus (42) incrémente son compteur à chaque réception d'un premier signal de position (50) et
- ce processus est terminé lorsque le maître de bus (42) reçoit le deuxième signal de position (52) du N-ème participant, et
- après la fin de ce processus, chaque participant présente une variation de la valeur de compteur différente des valeurs de compteur de chaque autre participant, qui l'identifie et spécifie sa position dans la succession des participants reliés au bus de communication (12).

2. Procédé selon la revendication 1, **caractérisé en ce que** le maître de bus (42) dispose d'une information concernant le nombre N de participants connectés au bus de communication (12) et que, après réception d'un deuxième signal de position (52), le maître de bus (42) compare la valeur de son compteur ou le nombre d'incrémentations de la valeur de son compteur avec le nombre N de participants et émet un message d'erreur ou répète l'initialisation lorsque la valeur du compteur ou le nombre d'incrémentations de la valeur de compteur ne correspond pas au nombre N de participants.

3. Procédé selon la revendication 1 ou 2, **caractérisé en ce que** les valeurs des compteurs de tous les participants sont identiques au début de l'initialisation et, en particulier, présentent la valeur 0, et que l'incrémentation de chaque compteur est identique et, en particulier, présente la valeur 1.

4. Procédé selon l'une des revendications 1 à 3, **caractérisé en ce que** chaque participant présente une entrée avec une résistance de terminaison (26) et en outre un comparateur de tension (30) par lequel, lors de l'émission de la commande d'initialisation d'un participant au participant suivant, un signal est émis qui indique si une tension est présente au niveau du comparateur de tension (30), qui est inférieure ou égale ou supérieure à la tension de référence, ce qui indique si ledit participant est le N-ième et donc le dernier participant ou non.

5. Procédé selon l'une des revendications 1 et 4, **caractérisé**
- **en ce que** chaque participant effectue un autotest concernant la capacité de fonctionnement avant l'envoi de la commande d'initialisation au premier participant (44) par le maître de bus (42) et détermine ainsi s'il est intact ou défectueux;
- **en ce que** la commande d'initialisation est transmise sur le bus de communication (12) en passant devant un participant défectueux au participant intact suivant disposé en aval du participant défectueux lorsqu'il est considéré par le maître de bus (42);
- **en ce qu'**un participant intact disposé en amont d'un participant défectueux détermine que le participant voisin en aval est défectueux et, à la réception de la commande d'initialisation, émet un deuxième signal de position (52) à tous les participants disposés en amont et au maître de bus (42) et
- **en ce que**, à l'aide d'une information précédente au sujet du nombre N de participants connectés au maître de bus (42) et du nombre de premiers signaux de position (50) et de deuxièmes signaux de position (52) reçus, le maître de bus (42) détermine combien de participants intacts et donc identifiés, et combien de participants spécifiés concernant leur position dans la succession de participants intacts, sont connectés au bus de communication.

6. Procédé selon la revendication 5, **caractérisé en ce qu'**à chaque participant dans le bus de communication (12) est attribuée une unité de commutation de dérivation avec un ou plusieurs commutateurs, par lesquels, dans un premier état de commutation, la communication et la transmission d'informations de position ont lieu sans intégration du participant et dans un deuxième état de commutation la communication et la transmission d'informations de position ont lieu avec participation du participant.

7. Procédé selon l'une des revendications 4 à 6, **caractérisé en ce que** dans chaque participant la résistance de terminaison (26) peut être activée ou désactivée au moyen d'un commutateur de test (28), et que la résistance de terminaison (26) est désactivée dans le cas d'un participant défectueux par la mise hors tension du commutateur de test (28) et activée dans le cas d'un participant intact par l'activation du commutateur de test (28).

8. Procédé selon l'une des revendications 1 à 7, **caractérisé en ce que** le bus de communication (12) présente un bus différentiel à deux fils (14) à faire fonctionner dans un niveau de mode commun pour la transmission de signaux différentiels dans un premier sens de communication du maître de bus (42) aux participants, et un canal de retour (40) pour la transmission de signaux dans un deuxième sens de communication, opposé au premier sens de communication, des participants au maître de bus (42),

9. Procédé selon la revendication 8, **caractérisé en ce que** le canal de retour (40) est réalisé sous forme d'une ligne à un fil ou par une modulation du niveau de mode commun du bus à deux fils (14).
